**Europäisches Patentamt**

**European Patent Office**

**Office européen des brevets**

(19)

(11) Veröffentlichungsnummer: **0 360 044 B1**

(12) **EUROPÄISCHE PATENTSCHRIFT**

(45) Veröffentlichungstag der Patentschrift:
23.10.91 Patentblatt 91/43

(51) Int. Cl.⁵: **F16L 55/033, F01N 1/24**

(21) Anmeldenummer: 89115932.9

(22) Anmeldetag: 29.08.89

(54) **Schalldämmendes Luftführungselement.**

(30) Priorität: 07.09.88 DE 3830346

(43) Veröffentlichungstag der Anmeldung:
28.03.90 Patentblatt 90/13

(45) Bekanntmachung des Hinweises auf die
Patenterteilung:
23.10.91 Patentblatt 91/43

(84) Benannte Vertragsstaaten:
FR GB SE

(56) Entgegenhaltungen:
DE-A- 2 341 055
US-A- 2 089 492
PATENT ABSTRACTS OF JAPAN, Band 10, Nr.
115 (M-474)[2172], 30. April 1986; & JP-A-60 247
005 (IMAKOU SEISAKUSHO K.K.) 06-12-1985

(73) Patentinhaber: REHAU AG + Co
Rheniumhaus
W-8673 Rehau (DE)

(72) Erfinder: Der Erfinder hat auf seine Nennung
verzichtet

## Beschreibung

Die Erfindung besteht aus einem schallabsorbierenden Luftführungselement, welches aus einem rohrförmigen, gewellten, flexiblen Grundelement und einem mit diesem verbundenen Schallschluckmaterial, insbesondere einem offenporigen Schaum aus polymerem Material, besteht.

Aus der US-A 3374856 ist ein Schallschluckelement für Gasturbinen und ähnliche Aggregate bekannt, welches aus einem äußeren, rohrförmigen Gebilde besteht, das mit einer Schicht schallschluckenden Materials ausgekleidet ist. Das äußere, rohrförmige Gebilde kann dabei als Wellrohr ausgebildet sein. Das schallschluckende Material dieser bekannten Einrichtung besitzt einen Durchflußwiderstand, der in der gleichen Größenordnung liegt wie die spezifische akustische Impedanz des durch die Leitung geführten Gases. Darüber hinaus weist dieses schallschluckende Material die Eigenschaft aus, daß es parallel zur Achse des Hüllrohres ausdehnbar und zusammenziehbar ausgelegt ist. Dieses schallschluckende Material kann nach dem bekannten Stand der Technik aus einem geschäumten polymeren Material, z.B. Polyurethan, bestehen. Mit dem Aufbau des Standes der Technik läßt sich zwar die Geschwindigkeit des strömenden Schalls und damit der Schalltransport partiell verringern, für die heutigen Anforderungen reicht diese Schallabsorption jedoch nicht aus. Die Grenzen der Schallabsorption dieser bekannten Einrichtungen liegen in der Verarbeitung des verwendeten Polymermaterials zu offenzelligem Schaum. Auch die Größe der hergestellten Schaumporen spielt hier eine erhebliche Rolle, so daß die Schallabsorption der bekannten Einrichtungen durch das Verarbeitungsverfahren bei der Herstellung von offenzelligen Schaumstrukturen begrenzt ist.

Aus der DE-A 2848597 ist ein schallabsorbierendes Gebilde bekannt, welches mit mehreren in einer Oberfläche parallel zueinander und zur Richtung des zu bekämpfenden Schallfeldes angeordneten Nuten und Rippen solcher Anordnung und Dimension ausgestattet ist, daß stationäre Schwingungssysteme in den Nuten entstehen. Das Besondere an diesem Stand der Technik ist, daß hier ein schallabsorbierendes Gebilde geschaffen wird, welches nicht in das zu dämpfende Schallfeld einsteht und dadurch optisch nicht stört. Dafür wird eine akustische Kopplung zwischen aufeinanderfolgenden Nuten bei den zu bekämpfenden Frequenzen vorgesehen, wobei sich die Oberfläche des schallschluckenden Gebildes im wesentlichen parallel zur Ausbreitungsrichtung des zu dämpfenden Schallfeldes erstreckt. Hierfür sind die Nuten bzw. Rippen mit Luft gefüllt, sowie der Boden und die Wände der Nuten bzw. Rippen schallabsorbierend gestaltet. Ferner sind die Öffnungen über den Nuten bzw. Rippen durch eine Kunststoff-Folie abgedeckt. Die Nuten bzw. Rippen können am Boden miteinander verbunden sein, wodurch eine akustische Kopplung solcher Nuten untereinander bzw. mit gesonderten Hohlräumen erzielbar ist.

Mit dieser bekannten Anordnung lassen sich beispielsweise Schallteppiche, wie sie im Bereich von Flugplätzen durch Motorenlärm startender und landender Flugzeuge auftreten, bekämpfen.

Hier setzt die Erfindung ein, die es sich zur Aufgabe gestellt hat, ein schallabsorbierendes Luftführungselement für den Einbau beispielsweise in Kraftfahrzeugen anzugeben, bei dem die Strömungsgeschwindigkeit des durchgeleiteten Schalls gegenüber dem Stand der Technik verringert und damit eine entsprechende Schallabsorption erzielbar ist. Erfindungsgemäß wird dazu vorgeschlagen, daß das gewellte Grundelement in seinen nach außen gerichteten Wellenspitzen in definiertem Abstand voneinander Umfangsperforierungen aufweist, daß auf dem äußeren Umfang des Grundelementes eine Matte des Schallschluckmaterials aufgezogen ist, und daß zwischen der Matte und den Wellentälern des Grundelementes eine Aufnahmekammer für die Schallwellen gebildet ist.

Das erfindungsgemäße Luftführungselement erreicht mit einer verringerten Geschwindigkeit des durchgeleiteten Schalls eine entsprechende Schallminderung. Diese Geschwindigkeitsverringerung wird einmal durch die Wellung des Grundelementes, zum anderen aber insbesondere über die Umfangsperforierungen in den nach außen gerichteten Wellenspitzen und die Bildung einer Schallaufnahmekammer zwischen der aufgezogenen Matte des Schallschluckmaterials und den Wellentälern des Grundelementes gebildet. Auf diese Weise werden die Randzonenbereiche des Schalls am inneren Umfang des Grundelementes gegenüber der Geschwindigkeit des zentralen Hauptstroms in ihrer Fließgeschwindigkeit verringert. Dabei bilden sich am gesamten inneren Umfang des Grundelementes Verwirbelungen des Schallstromes die sich von der Randzone weg bis gegen die Mitte des Schallstromes zu erstrecken. Aufgrund dieser Verwirbelungen gelangen die einzelnen Teilströme in die Wellungen des Grundelementes und von dort über die nach außen gerichteten Wellenspitzen eingebrachten Umfangsperforierungen in die Aufnahmekammer zwischen der Matte aus Schallschluckmaterial und den Wellentälern des Grundelementes. Dabei wird von der Erkenntnis Gebrauch gemacht, daß durch diese Vorgänge ein Teil der Bewegungsenergie in Wärme überführt wird, was gleichzeitig einer erheblichen Schallminderung gleichkommt. Die Schallwellen müssen also durch die Umfangsperforierungen an den nach außen gerichteten Wellenspitzen in die dahinterliegende Aufnahmekammer eindringen, wobei sie durch das Reflektionsprinzip mehrfach von den Wellungen sowie der Matte mit dem Schallschluckmaterial umgeleitet werden.

Durch diese Reflektionen wird die Bewegungsenergie in Wärme umgewandelt und gleichzeitig die Geschwindigkeit des Schallstromes in diesen Bereichen erheblich gedrosselt. Wenn die auf diese Art gedämpften Teilströme wieder in den Innenraum des Grundelementes zurückreflektiert werden, bewirkt der Schallverlust dieser Teilströme eine im Sinne der Schallabsorption positive Beeinflussung des Hauptschallstromes.

Es hat sich hierbei als vorteilhaft erwiesen, daß die Matte des Schallschluckmaterials, welche bekannterweise aus einem offenporigen Schaumstoff bestehen kann, an einer äußeren Umfangsfläche eine kompakte Haut aufweist. Diese kompakte Haut kann auch in den Querschnitt der Matte des Schallschluckmaterials eingebettet und/oder sowohl am äußeren als auch am inneren Umfang der Matte angeordnet sein. Auf diese Weise lassen sich die Reflektionen des Schalls entsprechend der auftretenden Geschwindigkeiten des Schallstromes unterschiedlich beeinflussen, indem das Volumen der Aufnahmekammer zwischen der Matte und den Wellentälern des Grundelementes variiert wird. Diese Aufnahmekammer wirkt als Resonatorkammer, in der die Phasenverschiebung der Schallwellen, d.h. deren Periodenabstand, verringert wird.

Als Schallschluckmaterial können sowohl offenporige Schaumstoffe als auch Gewebeelemente wie Vliese oder körnige Granulate eingesetzt werden. Wesentlich ist hierfür, daß das verwendete Schallschluckmaterial die Fähigkeit hat, eine Luft- und damit eine Schallführung durch die Poren bzw. Kapillarenöffnungen zu ermöglichen.

Zweckmäßig weisen die Umfangsperforierungen des Grundelementes einen Öffnungsgrad zwischen 5 und 70% auf.

Im Bedarfsfall können diese Umfangsperforierungen zusätzlich an weiteren Wandbereichen des Grundelementes angeordnet sein. Zur weiteren Beeinflussung des Schallstromes im Grundelement kann es zweckmäßig sein, daß die innere Oberfläche des Grundelementes zusätzlich zu den Wellungen strukturiert ist. Hierbei kann diese Strukturierung dadurch erfolgen, daß die Oberfläche des Grundelementes aus einer Beschichtung aus schallhemmendem Material besteht.

In einer besonderen Ausführungsform besteht die Matte des Schallschluckmaterials aus einer an sich bekannten Luftpolsterfolie. Auch mit einer solchen Luftpolsterfolie kann die Reflektion der Schallwellen in der Aufnahmekammer zwischen der Matte und den Wellentälern des Grundelementes im Sinne der Erfindung bewirkt werden. Auch dadurch lassen sich die Schallwellen in dem beschriebenen Sinne durch Reflektion beeinflussen, wodurch die Schallenergie in Wärmeenergie umgewandelt und damit der Schallpegel verringert wird.

Ein besonderer Vorteil, beispielsweise beim Einsatz des erfindungsgemäßen Luftführungselementes im Kraftfahrzeugbau, wird noch darin gesehen, daß durch die akustische Kopplung im Bereich der Aufnahmekammer, die als Resonatorkammer wirkt, die in die Aufnahmekammer eingedrungenen Teilbereiche des Schallstromes in ihrer Energie gebremst und in Wärmeenergie umgewandelt werden. Auf diese Weise ist es nicht erforderlich, einen in ein Kraftfahrzeug eingebauten Luftkanal über seine gesamte Länge mit der erfindungsgemäßen Schallabsorption auszugestalten, um auf die geforderten Schallschluckwerte zu kommen. Hier reicht es vielmehr aus, nur einen bestimmten Teilbereich eines solchen Luftkanals im Sinne der Erfindung auszustatten, was bei gleicher Leistung eine erhebliche Verbilligung gegenüber dem Stand der Technik darstellt.

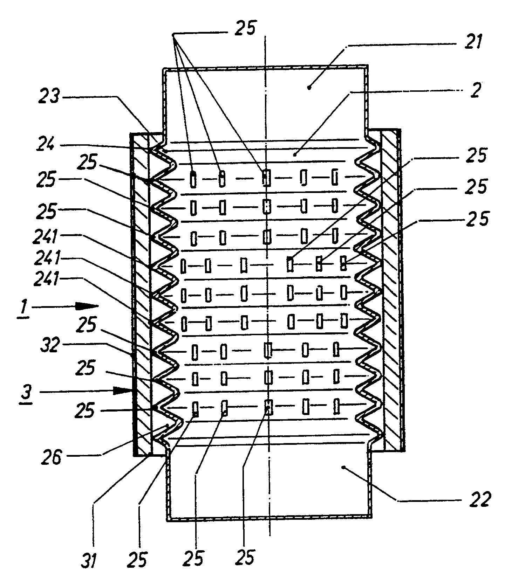

In der beigefügten Zeichnung ist das erfindungsgemäße Luftführungselement 1 im Querschnitt dargestellt. Hierbei ist auf das Grundelement 2 die Matte 3 aus Schallschluckmaterial aufgezogen. Das Grundelement 2 besitzt an seinen beiden freien Enden 21, 22 wellenlose Endbereiche, über die das Luftführungselement 1 an in der Zeichnung nicht dargestellte Kanäle anschließbar ist. Das Grundelement 2 besitzt in der dargestellten Ausführungsform zwischen den wellenlosen Endbereichen 21, 22 einen mit Wellungen 23 versehenen Mittelbereich. Die Wellungen 23 sind als Ringwellungen dargestellt, es können jedoch auch spiralige Wellungen zum Einsatz kommen. In die nach außen gerichteten Wellenspitzen 24 sind Umfangsperforierungen 25 eingebracht, die nach einem vorgegebenen Perforierungsbild eingehalten sein können. Bei der gezeigten Darstellung wechseln drei mit Umfangsperforierungen 25 versehene Wellenspitzen 24 mit drei in diesem Bereich nicht perforierten Wellenspitzen 241 ab. Dieses Perforierungsbild setzt sich über die Länge des gewellten Grundelements 2 fort. Von den Umfangsperforierungen 25 über der Mittellinie ausgehend ist zu erkennen, daß in der Draufsicht rechts und links von der Mittellinie jeweils zwei Umfangsperforierungen 25 in die Wellenspitzen 24 eingebracht sind. Die dritte Umfangsperforierung 25 ist im Querschnitt gezeichnet.

Im Bereich der nachfolgenden drei Wellenspitzen 241 ist über der Mittellinie keine Umfangsperforierung zu erkennen. Hier setzen sich von der Mittellinie aus gesehen, jeweils drei in Draufsicht zu erkennende Umfangsperforierungen 25 nach außen fort. Zum Endbereich 22 zu wiederholt sich dann das erste Stanzbild der Umfangsperforierungen 25.

Die dargestellte Möglichkeit, die Umfangsperforierungen 25 in die Wellenspitzen 24 des Grundelementes 2 einzubringen, ist lediglich beispielhaft wiedergegeben.

Es kann auch eine erhebliche Reduzierung bzw. Vermehrung der Umfangsperforierungen vorgenommen werden.

Ausgehend von der Überlegung, daß der Öffnungsgrad des Grundelementes 5 bis 70% seiner Außenfläche betragen kann, ist davon auszugehen, daß jeweils nach dem erforderlichen Einsatzzweck der günstigste Bereich des erforderlichen Öffnungsgrades durch empirische Versuche festgelegt werden muß. Solche Versuche bereiten dem Fachmann bei Berücksichtigung der hier dargelegten Besonderheiten des erfindungsgemäßen Luftführungselementes keine Schwierigkeiten.

Über die nach außen gerichteten Wellenspitzen 24 des Grundelementes 2 ist die Matte 3 des Schallschluckmaterials derart aufgezogen, daß sich zwischen dem äußeren Umfang des Grundelementes 2 und der inneren Wandung 31 der Matte 3 die Aufnahmekammer 26 bildet. Handelt es sich — wie dargestellt — bei den Wellungen des Grundelementes 2 um Ringwellungen, dann bilden sich über den gesamten gewellten Bereich gesehen, eine Vielzahl von solchen Aufnahmekammern 26. Wird ein Grundelement 2 mit spiraliger Außenwellung gewählt, dann können je nach Wellenfolge eine oder mehrere Aufnahmekammern 26 am äußeren Umfang des Grundelementes 2 angeordnet sein.

Die Matte 3 besteht in der gezeigten Darstellung aus einem offenzelligen Schaumstoff, der an seiner äußeren Oberfläche eine kompakte Haut 32 aufweist.

Die Dicke der Matte 3, die Anordnung der kompakten Haut 32, die Höhe der Wellungen des Grundelements 2 und die Anzahl der Umfangsperforierungen 25 in den nach außen gerichteten Wellenspitzen 24 beeinflussen insgesamt den Wirkungsgrad des Luftführungselementes, wobei es auf die Figuration der Umfangsperforierungen 25 nicht ankommt.

Messwerte eines Aufbaus nach

A — Stand der Technik US-PS 3374856
B — Vliesabdeckung nach der Erfindung
C — Schaumstoffabdeckung nach der Erfindung

| Frequenz in HZ | Schalldruckpegel in dB(A) | | |
|---|---|---|---|
| | A | B | C |
| 200 | 43,5 | 41 | 38,5 |
| 500 | 50,5 | 48 | 44 |
| 1000 | 54,5 | 38,5 | 42,5 |
| 2000 | 46 | 35,5 | 34 |

## Patentansprüche

1. Schallabsorbierendes Luftführungselement, bestehend aus einem rohrförmigen, gewellten, flexiblen Grundelement und einem mit diesem verbundenen Schallschluckmaterial, insbesondere einem offenporigen Schaum aus polymerem Material, dadurch gekennzeichnet, daß das gewellte Grundelement (2) in seinen nach außen gerichteten Wellenspitzen (24) in definiertem Abstand voneinander Umfangsperforierungen (25) aufweist, daß auf dem äußeren Umfang des Grundelementes (2) eine Matte (3) des Schallschluckmaterials aufgezogen ist, und daß zwischen der Matte (3) und den Wellentälern des Grundelementes (2) wenigstens eine Aufnahmekammer (26) für die Schallwellen gebildet ist.

2. Luftführungselement nach Anspruch 1, dadurch gekennzeichnet, daß die Matte (3) an einer ihrer äußeren Umfangsflächen eine kompakte Haut (32) aufweist.

3. Luftführungselement nach Anspruch 1, dadurch gekennzeichnet, daß die kompakte Haut (32) in die Matte (3) eingebettet ist.

4. Luftführungselement nach Anspruch 1, dadurch gekennzeichnet, daß die kompakte Haut (32) am äußeren und am inneren Umfang der Matte (3) angeordnet ist.

5. Luftführungselement nach Anspruch 1, dadurch gekennzeichnet, daß die Umfangsperforierungen (25) einen Öffnungsgrad des Grundelementes (2) zwischen 5 und 70% ergeben.

6. Luftführungselement nach Anspruch 1, dadurch gekennzeichnet, daß die innere Oberfläche des Grundelementes (2) strukturiert ist.

7. Luftführungselement nach Ansprüchen 1 und 6, dadurch gekennzeichnet, daß die innere Oberfläche des Grundelementes (2) aus einer Beschichtung aus schallhemmendem Material besteht.

8. Luftführungselement nach Anspruch 1, dadurch gekennzeichnet, daß die Matte (3) eine an sich bekannte Luftpolsterfolie ist.

## Claims

1. Sound-absorbing air-guide element, comprising a tubular, undulating, flexible basic element and, connected to it, a sound-absorbing material, in particular an open-pored polymer foam material, characterised by the fact that the circumference of the valley peaks (24) of the undulating basic element (2) feature perforations (25) at defined intervals, that a layer (3) of the sound-absorbing material surrounds the outer circumference of the basic element (2), and that at least one chamber (26) is formed between the layer (3) and the wave valleys of the basic element (2) to absorb sound waves.

2. Air-guide element as described in claim 1, characterised by the fact that the layer (3) exhibits a compact skin (32) on one of its outer circumferential surfaces.

3. Air-guide element as described in claim 1, characterised by the fact that the compact skin (32) is embedded in the layer (3).

4. Air-guide element as described in claim 1, characterised by the fact that the compact skin (32) is featured on both the outer as well as on the inner circumference of the layer (3).

5. Air-guide element as described in claim 1, characterised by the fact that the circumferential perforations (25) enable the basic element (2) to open by between 5 and 70%.

6. Air-guide element as described in claim 1, characterised by the fact that the inner surface of the basic element (2) is textured.

7. Air-guide element as described in claims 1 and 6, characterised by the fact that the inner surface of the basic element (2) comprises a coating of sound-absorbing material.

8. Air-guide element as described in claim 1, characterised by the fact that the layer (3) consists of familiar bubble film.

## Revendications

1. Elément de ventilation absorbant le son, composé d'un élément de base flexible, ondulé et tubulaire et d'un matériau d'insonorisation juxtaposé à celui-ci, et tout particulièrement d'une mousse poreuse en matière polymère, caractérisé par le fait que l'élément de base (2) ondulé présente sur les extrémités d'ondulation (24) dirigées vers l'extérieur des perforations périphériques (25) à intervalles définis, caractérisé par le fait que sur la périphérie extérieure de l'élément de base (2) il y a une natte (3) en matière d'insonorisation et qu'entre la natte (3) et les creux des ondulations de l'élément de base (2) il y ait au moins la constitution d'une chambre de réception (26) pour les ondes sonores.

2. Elément de ventilation selon la revendication 1, caractérisé par le fait que la natte (3) présente une membrane compacte (32) sur sa surface périphérique extérieure.

3. Elément de ventilation selon la revendication 1, caractérisé par le fait que la membrane compacte (32) est insérée dans la natte (3).

4. Elément de ventilation selon la revendication 1, caractérisé par le fait que la membrane compacte (32) est installée sur la périphérie extérieure et sur la périphérie intérieure de la natte (3).

5. Elément de ventilation selon la revendication 1, caractérisé par le fait que les perforations sur la phériphérie (25) donnent un degré d'ouverture d'entre 5 et 70% de l'élément de base.

6. Elément de ventilation selon la revendication 1, caractérisé par le fait que la surface intérieure de l'élément de base (2) est structuré.

7. Elément de ventilation selon les revendications 1 à 6, caractérisé par le fait que la surface intérieure de l'élément de base (2) est constituée par une enduction d'une matière absorbant le son.

8. Elément de ventilation selon la revendication 1, caractérisé par le fait que la natte (3) est une feuille de matelas d'air isolant connue en soi.